# EUROPÄISCHE PATENTSCHRIFT

(11) **EP 1 795 389 B1**
(45) Veröffentlichungstag und Bekanntmachung des Hinweises auf die Patenterteilung: **17.10.2012**
(21) Anmeldenummer: 06125716.8
(22) Anmeldetag: 08.12.2006
(51) Int. Cl.: B60H 3/06, B61D 27/00

(54) **Schienenfahrzeug mit Belüftungseinrichtung**
Rail vehicle with ventilation device
Véhicule sur rails doté d'un dispositif d'aération

(30) Priorität: 09.12.2005 DE 102005059326
(43) Veröffentlichungstag der Anmeldung: 13.06.2007
(73) Patentinhaber: Bombardier Transportation GmbH, 10785 Berlin (DE)
(72) Erfinder: Hemmerich, Hans Dirk, 47918 Tönisvorst (DE); Chatzicharalambous, Konstantin, 14532 Kleinmachnow (DE)
(74) Vertreter: Cohausz & Florack

(56) Entgegenhaltungen:
- EP-A- 0 829 409
- EP-A2- 0 491 175
- DE-U1- 29 600 512
- FR-A- 2 838 380
- NL-A- 9 101 071

## Beschreibung

Die vorliegende Erfindung betrifft ein Schienenfahrzeug mit einem Wagenkasten, der wenigstens einen Innenraum zur Passagierbeförderung aufweist, und einer Belüftungseinrichtung zur Belüftung des Innenraums, die wenigstens einen an dem Wagenkasten angeordneten Lufteinlass für Frischluft und wenigstens eine Luftfiltereinrichtung umfasst. Sie betrifft weiterhin einen Zugverbund, der ein entsprechendes Schienenfahrzeug umfasst.

Bei Schienenfahrzeugen werden häufig Belüftungseinrichtungen, wie Klimaanlagen oder dergleichen, eingesetzt, bei denen eine Abscheidung partikel- oder tröpfchenförmiger Verunreinigungen der Luft erfolgt, die dem Passagierraum zugeführt wird, um die Belastung der Passagiere so gering wie möglich zu halten. Ein solches Schienenfahrzeug ist beispielsweise aus der EP 1 010 599 bekannt. In dieser Schrift wird ein aus einem Stromnetz gespeister U-Bahn-Zug beschrieben, bei dem die Klimaanlage und deren Ansaugöffnungen im Dachbereich angeordnet sind, da dort zwar begrenzter aber zumindest ausreichender Bauraum für deren Anordnung zur Verfügung steht.

Die Anordnung der Klimaanlage im Dachbereich ist unabhängig von der Fahrzeugart häufig aus eben diesen Platzgründen erforderlich bzw. erwünscht. Dies bringt jedoch bei Fahrzeugen bzw. Zügen mit Verbrennungsmotoren, in der Regel Dieselmotoren, den Nachteil mit sich, dass gerade über die Ansaugöffnungen im Dachbereich bei ungünstigen Bedingungen eventuell störende Abgase angesaugt werden, welche die bekannten Filtereinrichtungen nahezu ungestört passieren und dem Passagierraum zugeführt werden.

Es wird daher bei in Verbindung mit Verbrennungsmotoren eingesetzten Schienenfahrzeugen häufig von einer Anordnung der Ansaugöffnungen im Dachbereich abgesehen. Meist werden trotz der Anordnung der Klimaanlage im Dachbereich die Ansaugöffnungen in diesem Fall unterhalb der Fensterlinie angeordnet, da hier in der Regel ein deutlich geringeres Risiko des Ansaugens störender Motorabgase besteht. Alternativ können die Ansaugöffnungen entsprechend gestaltet werden, um das Ansaugen von Motorabgasen, die in der Regel entfernt von den Ansaugöffnungen aus einem Auspuff austreten und dann an den Ansaugöffnungen vorbeiströmen, so weit wie möglich zu minimieren.

Beide Varianten haben den Nachteil, dass sie mit teils erheblichem konstruktivem Aufwand verbunden sind. So sind beispielsweise erheblich längere Luftkanäle zwischen den unterhalb der Fensterlinie angeordneten Ansaugöffnungen und der im Dachbereich angeordneten Klimaanlage erforderlich. Zudem wird bei der Anordnung der Ansaugöffnungen unterhalb der Fensterlinie Luft angesaugt, die eine größere Menge an partikel- oder tröpfchenförmigen Verunreinigungen, beispielsweise bei der Fahrt aufgewirbelten Staub etc., enthält. Hiermit steigen die Anforderungen and die Abscheider für diese Verunreinigungen bzw. sinken deren Standzeiten.

Der vorliegenden Erfindung liegt daher die Aufgabe zu Grunde, ein Schienenfahrzeug der eingangs genannten Art zur Verfügung zu stellen, welches die oben genannten Nachteile nicht oder zumindest in geringerem Maße aufweist und insbesondere auf einfache und zuverlässige Weise zumindest eine deutliche Reduktion der Zufuhr störender Abgase in den Passagierraum des Schienenfahrzeugs ermöglicht.

Die vorliegende Erfindung löst diese Aufgabe ausgehend von einem Schienenfahrzeug gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache und zuverlässige Weise zumindest eine deutliche Reduktion der Zufuhr störender Abgase in den Passagierraum des Schienenfahrzeugs ermöglicht, wenn die Luftfiltereinrichtung eine Adsorptionseinrichtung zur zumindest teilweisen Adsorption flüchtiger organischer Stoffe umfasst. Es hat sich gezeigt, dass sich eine solche Adsorptionseinrichtung trotz der in der Regel begrenzten Platzverhältnisse in die Belüftungseinrichtung eines Schienenfahrzeugs mit ihren vergleichsweise hohen Volumenströmen im Bereich von 1500 m³/h bis 4000 m³/h integrieren lässt, ohne dabei den Energieaufwand für die Erzeugung dieser Volumenströme wesentlich zu erhöhen.

Durch die Adsorption flüchtiger organischer Stoffe, zu welchen in der Regel auch die störenden Komponenten der Motorabgase zählen, ist es aber möglich, die Ansaugöffnungen der Belüftungseinrichtung an beliebiger Stelle anzuordnen. Die Anordnung der Ansaugöffnungen kann dann insbesondere hinsichtlich eines möglichst geringen Bauaufwands für die Belüftungseinrichtung optimiert sein.

Bevorzugt ist die Adsorptionseinrichtung gezielt zur zumindest teilweisen Adsorption von Motorabgasen, insbesondere Dieselmotorabgasen, ausgebildet, da hiermit besonders gute Ergebnisse bei der Filterung der Zuluft für den Passagierraum des Schienenfahrzeugs erzielt werden können.

Die Adsorptionseinrichtung kann nach einem beliebigen Wirkprinzip arbeiten. So kann sie sowohl zur Physisorption als auch zur Chemisorption ausgebildet sein, bei der sie neben organischen dann auch anorganische Stoffe adsorbieren kann. Insbesondere können bei der Chemisorption auch saure und alkalische Gase adsorbiert werden.

Als Adsorptionsmittel (so genanntes Adsorbens) können beliebige geeignete Stoffe verwendet werden. Bevorzugt werden mikroporöse Stoffe verwendet, die vorzugsweise eine spezifische Oberfläche von 500 m²/g bis 2500 m²/g aufweisen. Hierbei kann es sich beispielsweise um natürliche oder synthetische Zeolithe handeln. Bevorzugt umfasst die Adsorptionseinrichtung als Adsorptionsmittel jedoch Aktivkohle, da sich diese besonders für den Einsatz im Zusammenhang mit den hier in Rede stehenden Motorabgasen eignet. Bevorzugt wird Aktivkohle mit einer spezifischen Oberfläche von wenigstens 1000 m²/g verwendet, da hiermit besonders gute Ergebnisse bei der Filterung von Motorabgasen erzielt werden können..

Die Adsorptionseinrichtung kann in beliebiger geeigneter Weise aufgebaut sein. Bevorzugt umfasst die Adsorptionseinrichtung einen Trägerkörper mit einer Trägeroberfläche, die von der zu filternden Luft überströmbar ist und mit einer Auflage aus einem Adsorptionsmittel, bevorzugt einer Aktivkohle-Auflage, versehen ist. Bevorzugt ist der Trägerkörper dabei ein luftdurchlässiger Körper, beispielsweise ein poröser, ungewobener oder gewobener Körper, der von dem zu filternden Luftstrom durchströmt wird.

Die Flächenbelegung der Trägeroberfläche mit dem Adsorptionsmittel kann je nach den Anforderungen der tatsächlichen Anwendung gewählt werden. Bevorzugt beträgt die Flächenbelegung der Trägeroberfläche mit dem Adsorptionsmittel, vorzugsweise einer Aktivkohle, mehr als 350 g/m², vorzugsweise mehr als 400 g/m², weiter vorzugsweise wenigstens 450 g/m². Hiermit lassen sich an die Anwendung im Bereich der Belüftung bzw. Klimatisierung von Schienenfahrzeugen besonders gut angepasste Konfigurationen erzielen. Insbesondere wird hiermit eine gute Anpassung and die oben genannten, im Schienenfahrzeugbereich zu verarbeitenden hohen Luftvolumenströme erzielen. Vor allen Dingen lassen sich hiermit für den Schienenfahrzeugbereich mit seiner intensiven Nutzung der Fahrzeuge ausreichend lange Standzeiten der Adsorptionseinrichtung von bis zu einem Jahr und gegebenenfalls darüber hinaus erzielen, sodass auch der Wartungsaufwand ausreichend gering bleibt.

Besonders günstige Eigenschaften, insbesondere auch hinsichtlich einer möglichst geringen Behinderung der Strömung (geringer Druckverlust) bei gleichzeitig hoher Adsorptionswirkung, lassen sich mit einer Flächenbelegung der Trägeroberfläche mit dem Adsorptionsmittel von 350 g/m² bis 450 g/m² erzielen. Mit anderen Worten lässt sich mit einer solchen Flächenbelegung bei den großen Volumenströmen (1500 m³/h bis 4000 m³/h) für ein Schienenfahrzeug und bei einer für diese Anwendung vorgegebenen Adsorptionsleistung ein besonders geringer Druckverlust erzielen.

Bevorzugt umfasst die Luftfiltereinrichtung eine Partikelfiltereinrichtung, um auch die Abscheidung von partikelförmigen und gegebenenfalls auch tröpfchenförmigen Verunreinigungen zu erzielen. Vorzugsweise ist die Partikelfiltereinrichtung der Adsorptionseinrichtung in Strömungsrichtung der zu filternden Luft vorgeschaltet, sodass nur entsprechend vorgefilterte Luft durch die Adsorptionseinrichtung strömt und die Adsorptionsleistung möglichst nicht durch Ablagerungen solcher Partikel beeinträchtigt wird. Vorzugsweise ist die Partikelfiltereinrichtung unmittelbar benachbart zu der Adsorptionseinrichtung angeordnet, sodass gegebenenfalls eine besonders kompakte Einheit entsteht.

Die Adsorptionseinrichtung kann beliebige geeignete Gestalt aufweisen. Insbesondere kann sie an die Gegebenheiten der Luftkanäle angepasst sein. Weiterhin kann sie hinsichtlich einer möglichst geringen Behinderung der Strömung - mithin also auf die Generierung eines möglichst geringen Druckverlustes bei der Durchströmung - optimiert sein. Vorzugsweise beträgt der durch sie erzeugte Druckverlust weniger als 150 Pa, vorzugsweise weniger als 125 Pa. Der Einfluss auf die erforderliche Lüfterleistung durch die zusätzliche Adsorptionseinrichtung ist in diesem Fall dann ausreichend gering.

Bei besonders vorteilhaften, weil einfach aufgebauten und einfach zu handhabenden Varianten der Erfindung ist die Adsorptionseinrichtung im Wesentlichen plattenförmig ausgebildet. Vorzugsweise beträgt die Dickenabmessung der Adsorptionseinrichtung 20 mm bis 35 mm, weiter vorzugsweise etwa 30 mm. Die Längenabmessung der Adsorptionseinrichtung beträgt vorzugsweise 800 mm bis 950 mm, weiter vorzugsweise etwa 875 mm. Die Breitenabmessung der Adsorptionseinrichtung beträgt vorzugsweise 175 mm bis 275 mm, weiter vorzugsweise etwa 225 mm, beträgt.

Die Luftfiltereinrichtung kann grundsätzlich an beliebiger Stelle innerhalb der Belüftungseinrichtung angeordnet sein. So kann sie beispielsweise in Strömungsrichtung nach einer Mischstation angeordnet sein, in der die von außen angesaugte Frischluft mit Umluft aus dem Passagierraum gemischt wird. Dies hat den Vorteil, dass auch Verunreinigungen, die in der Umluft enthalten sind, nochmals gefiltert werden.

Bei bevorzugten, weil besonders einfach gestalteten Varianten des erfindungsgemäßen Schienenfahrzeugs ist die Luftfiltereinrichtung im Bereich des Lufteinlasses angeordnet. Dies hat unter anderem den Vorteil, dass die Luftfiltereinrichtung besonders einfach gestaltet und einfach zugänglich ist, was ihre Herstellung, Montage und Wartung vereinfacht.

Vorzugsweise umfasst der Lufteinlass ein in der Außenwand des Wagenkastens aufgenommenes, insbesondere lösbar befestigtes, Lüftungsgitter. Dieses kann zum einen bereits so gestaltet sein, dass es durch die von ihm erzwungene Strömungsführung eine gewisse Abscheidung von partikel- und/oder tröpfchenförmigen Verunreinigungen in der angesaugten Luft bewirkt. Die Lösbarkeit gewährt zudem einen einfachen Zugang zu der Filtereinrichtung, die dann bevorzugt nahe oder sogar unmittelbar hinter dem Lüftungsgitter angeordnet ist.

Bei bevorzugten Varianten des erfindungsgemäßen Schienenfahrzeugs weist der Wagenkasten wenigstens ein Fenster auf, das eine Fensteroberkante definiert, und der Lufteinlass ist oberhalb der Fensteroberkante angeordnet. Hiermit ist eine besonders einfache Gestaltung mit Anordnung der Belüftungseinrichtung im Dachbereich möglich.

Besonders vorteilhaft wirkt sich die Erfindung aus, wenn sie unmittelbar in einem Schienenfahrzeug zur Anwendung kommt, in dem ein Verbrennungsmotor angeordnet ist, da hier aufgrund der zwangsläufigen räumlichen Nähe zwischen der Auspuffanlage des Verbrennungsmotors und der Ansaugöffnung bzw. den Ansaugöffnungen der Belüftungseinrichtung eine besonders hohe Wahrscheinlichkeit für das Ansaugen von Motorabgasen besteht. Vorzugsweise umfasst das Schienenfahrzeug daher es einen Verbrennungsmotor, insbesondere einen Dieselmotor.

Die vorliegende Erfindung betrifft weiterhin einen Zugverbund mit einem erfindungsgemäßen Schienenfahrzeug. Vorzugsweise ist hier wenigstens ein mit dem Schienenfahrzeug gekoppeltes weiteres Fahrzeug vorgesehen, das einen Verbrennungsmotor, insbesondere einen Dieselmotor, umfasst.

Weitere bevorzugte Ausgestaltungen der Erfindung ergeben sich aus den Unteransprüchen bzw. der nachstehenden Beschreibung bevorzugter Ausführungsbeispiele, welche auf die beigefügte Zeichnung Bezug nimmt. Es zeigt:

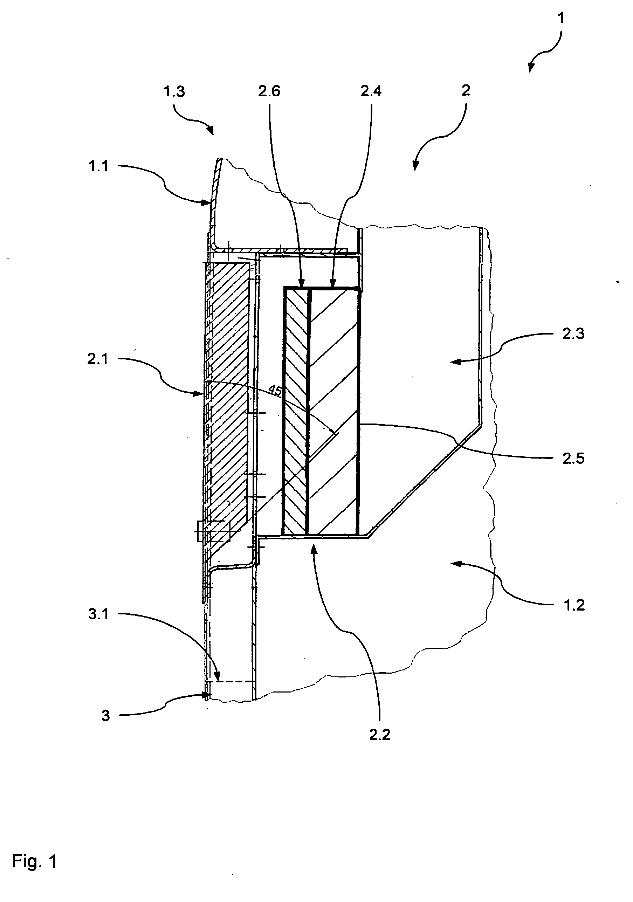

- Figur 1: einen schematischen Schnitt durch einen Teil einer bevorzugten Ausführungsform des erfindungsgemäßen Schienenfahrzeugs.

Die Figur 1 zeigt einen schematischen Schnitt durch einen Teil eines erfindungsgemäßen Schienenfahrzeugs in Form eines Triebwagens 1 mit einem Wagenkasten 1.1, der einen Innenraum 1.2 zur Passagierbeförderung aufweist. Der Triebwagen 1 wird durch einen dieselelektrische Antriebseinheit mit einem - nicht dargestellten - Dieselmotor angetrieben.

Im Dachbereich 1.3 des Triebwagens 1 ist eine Belüftungseinrichtung 2 zur Belüftung des Innenraumes 1.2 angeordnet. Diese Belüftungseinrichtung 2 umfasst einen am Wagenkasten 1.1 angeordneten Lufteinlass in Form eines Lüftungsgitters 2.1, über das Frischluft aus der Umgebung des Wagenkastens 1.1 angesaugt wird. Die Frischluft passiert eine Luftfiltereinrichtung 2.2 der Belüftungseinrichtung 2 und wird dann über einen Luftführungskanal 2.3 der Belüftungseinrichtung 2 zu einer - nicht dargestellten - Klimaanlage der Belüftungseinrichtung 2 geführt, wobei sie zuvor gegebenenfalls noch in einer Luftmischeinheit mit aus dem Innenraum 1.2 abgezogener Umluft vermischt wird. In der Klimaanlage wird die Luft dann entsprechend dem im Innenraum zu erzielenden Klima konditioniert. Anschließend wird die so konditionierte Luft dem Innenraum 1.2 als Zuluft über entsprechende Luftauslässe im Innenraum zugeführt .

Das Lüftungsgitter 2.1 ist im Dachbereich 1.3 des Wagenkastens 1.1 oberhalb einer Fensteroberkante 3.1 angeordnet, die durch eine Fensteröffnung 3 im Wagenkasten 1.1 definiert ist. Diese Anordnung des Lüftungsgitters 2.1 im Dachbereich 1.3 bringt den Vorteil mit sich, dass der Luftführungskanal 2.3 vergleichsweise kurz gehalten und einfach gestaltet sein kann. Weiterhin kann er, anders als bei bekannten Lösungen mit unterhalb der Fensteröffnung angeordneten Lufteinlässen, unter Strömungsgesichtspunkten günstig gestaltet werden. So kann er mit einem vergleichsweise großen Durchmesser gestaltet werden, der zu geringen Strömungsverlusten führt, da er nicht über weite Strecken in die vergleichsweise dünne Seitenwand des Wagenkastens integriert werden muss.

Mit dieser Anordnung des Lüftungsgitters 2.1 im Dachbereich 1.3 erhöht sich jedoch das Risiko, bei ungünstigen Strömungsbedingungen die warmen nach oben steigenden bzw. ebenfalls im Dachbereich entweichenden Motorabgase des Dieselmotors über das Lüftungsgitter 2.1 anzusaugen. Um zumindest weitgehend zu verhindern, dass störende oder gar gesundheitsschädliche flüchtige Komponenten der Motorabgase über die Belüftungseinrichtung 2 in den Innenraum 1.2 transportiert werden, umfasst die Luftfiltereinrichtung 2.2 eine Adsorptionseinrichtung in Form eines Aktivkohlefilters 2.4.

Der Aktivkohlefilter 2.4 adsorbiert flüchtige organische Stoffe, zu welchen auch die störenden Komponenten der Motorabgase zählen. Hierdurch ist es möglich, die Lüftungsgitter 2.1 der Belüftungseinrichtung 2 an nahezu beliebiger Stelle anzuordnen, ohne größere Rücksicht auf deren Lage zur Abgasanlage des Dieselmotors nehmen zu müssen. Die Anordnung der kann Lüftungsgitter 2.1 dabei hinsichtlich eines möglichst geringen Bauaufwands für die Belüftungseinrichtung 2 optimiert sein.

Der Aktivkohlefilter 2.4 kann nach einem beliebigen Wirkprinzip arbeiten. So kann er sowohl ohne besondere Imprägnierung primär zur Physisorption ausgebildet sein: ebenso kann er aber durch entsprechende Imprägnierung auch zur Chemisorption ausgebildet sein, bei der er neben organischen dann auch anorganische Stoffe adsorbieren kann. Insbesondere können bei der Chemisorption dann auch saure und alkalische Gase adsorbiert werden.

Der Aktivkohlefilter 2.4 umfasst einen mattenförmigen, von der angesaugten Frischluft durchströmbaren Trägerkörper 2.5. An seinen Außenseiten sowie in seinem Inneren bildet der Trägerkörper 2.5 eine Trägeroberfläche aus, die von der zu filternden Luft überströmbar ist und mit einer Auflage aus Aktivkohle versehen ist. Die im vorliegenden Beispiel verwendete mikroporöse Aktivkohle weist eine spezifische Oberfläche von über 1000 m²/g auf.

Die Flächenbelegung der Trägeroberfläche mit der Aktivkohle liegt bei mehr als 400 g/m², im vorliegenden Beispiel bei etwa 450 g/m². Hiermit ist eine Konfiguration realisiert, die an die Anwendung im Bereich der Belüftung bzw. Klimatisierung eines Schienenfahrzeugs besonders gut angepasst ist. So wird bei den zu verarbeitenden hohen Luftvolumenströmen im Bereich von 1500 m³/h bis 4000 m³/h neben besonders guten Ergebnissen bei der Filterung der Motorabgase eine ausreichend lange Standzeit des Aktivkohlefilters 2.4 erzielt. Diese liegt bei mindestens 4000 Betriebsstunden, sodass auch der Wartungsaufwand für die Luftfiltereinrichtung 2.2 ausreichend gering bleibt.

Der Aktivkohlefilter 2.4 ist auf die Generierung eines möglichst geringen Druckverlustes bei der Durchströmung hin optimiert. Im vorliegenden Beispiel beträgt der durch ihn erzeugte Druckverlust weniger als 150 Pa, nämlich etwa 125 Pa. Der Einfluss auf die erforderliche Lüfterleistung durch den Aktivkohlefilter 2.4 ist somit ausreichend gering.

Wie bereits erwähnt, ist der Aktivkohlefilter 2.4 matten- bzw. plattenförmig ausgebildet. Im gezeigten Beispiel beträgt seine Dickenabmessung (in Figur 1 senkrecht zur Hochachse des Triebwagens 1) etwa 30 mm, während seine Längenabmessung (senkrecht zur Zeichnungsebene der Figur 1) etwa 875 mm beträgt und seine Breitenabmessung (in Figur 1 in Richtung der Hochachse des Triebwagens 1) etwa 225 mm beträgt. Es versteht sich jedoch, dass bei anderen Varianten der Erfindung auch andere Abmessungen und Geometrien für den Aktivkohlefilter vorgesehen sein können.

Hinsichtlich der Wirksamkeit des Aktivkohlefilters 2.4 bei der Geruchsminderung im Zusammenhang mit der Ansaugung von Dieselabgasen ist anzumerken, dass mit ihm eine Reduktion des Geruchspegels von 34 bis 35 dBod auf etwa 25 bis 27,5 dBod erzielt wird, wobei eine Reduktion um 3 dBod einer Geruchsminderung von 50% entspricht.

Die Luftfiltereinrichtung 2.2 umfasst weiterhin einen Partikelfiltereinrichtung in Form eines Partikelfilters 2.6, um auch die Abscheidung von partikelförmigen und gegebenenfalls auch tröpfchenförmigen Verunreinigungen aus der angesaugten Frischluft zu erzielen. Der Partikelfilter 2.6 ist in Strömungsrichtung der zu filternden Frischluft unmittelbar vor dem Aktivkohlefilter 2.4 angeordnet, sodass nur entsprechend vorgefilterte Luft durch den Aktivkohlefilter 2.4 strömt und die Adsorptionsleistung möglichst nicht durch Ablagerungen solcher Partikel beeinträchtigt wird. Zudem gestaltet sich die Luftfiltereinrichtung 2.2 hierdurch als besonders kompakte Einheit.

Die Luftfiltereinrichtung 2.2 ist in unmittelbarer Nähe des Lüftungsgitters 2.1 angeordnet. Dies hat unter anderem den Vorteil, dass die Luftfiltereinrichtung 2.2 besonders einfach gestaltet und einfach zugänglich ist, was ihre Herstellung, Montage und Wartung vereinfacht. Es versteht sich jedoch, dass die Luftfiltereinrichtung bei anderen Varianten der Erfindung auch an beliebiger anderer Stelle innerhalb der Belüftungseinrichtung angeordnet sein kann. So kann sie beispielsweise in Strömungsrichtung nach der oben beschriebenen Mischstation angeordnet sein. Dies hat den Vorteil, dass auch Verunreinigungen, die in der Umluft enthalten sind, nochmals gefiltert werden.

Das Lüftungsgitter 2.1 ist lösbar in der Außenwand des Wagenkastens 1.1 befestigt. Hierzu kann es beispielsweise über - nicht dargestellte - Scharniere klappbar am Wagenkasten 1.1 befestigt sein, wodurch sich seine Handhabung deutlich erleichtert.

Das Lüftungsgitter 2.1 ist dank zur Hochachse des Triebwagens 1 geneigter Lamellen bereits so gestaltet, dass es durch die von ihm erzwungene Strömungsführung bereits eine gewisse Abscheidung von partikel- und/oder tröpfchenförmigen Verunreinigungen in der angesaugten Frischluft bewirkt wird. Die Lösbarkeit des Lüftungsgitters 2.1 gewährt zudem einen einfachen Zugang zu der unmittelbar dahinter angeordneten Luftfiltereinrichtung 2.2.

Es versteht sich, dass je nach den Anforderungen an die Belüftungseinrichtung eine beliebige Anzahl von Lufteinlässen vorgesehen sein können. So kann bei entsprechender Dimensionierung ein einziger Lufteinlass ausreichen, während in der Regel jedoch mehrere solcher Lufteinlässe am Wagenkasten verteilt vorgesehen sind. Dies ist insbesondere im Hinblick darauf von Vorteil, dass damit das Risiko minimiert werden kann, gerade an einer Stelle Frischluft anzusaugen, an der bei den aktuellen Strömungsbedingungen Dieselabgase vorbeiziehen. Im vorliegenden Beispiel sind es vier Lufteinlässe 2.1, nämlich jeweils zwei auf beiden Längsseiten des Wagenkastens 1.1, wobei die beiden Lufteinlässe 2.1 auf der jeweiligen Längsseite des Wagenkastens 1.1 in Längsrichtung des Wagenkastens 1.1 beabstandet sind.

Die vorliegende Erfindung wurde vorstehend ausschließlich anhand eines Beispiels eines dieselelektrischen Triebwagens beschrieben. Es versteht sich jedoch, dass sie auch in einem Zugverbund zum Einsatz kommen kann, in dem ein in der beschriebenen Weise ausgebildeter Wagen nicht selbst mit einem Verbrennungsmotor versehen ist, sondern mit einem Fahrzeug, beispielsweise einer Lokomotive oder einem Triebwagen, gekoppelt ist, das mit einem Verbrennungsmotor versehen ist.

## Patentansprüche

1. Schienenfahrzeug mit
- einem Wagenkasten (1.1), der wenigstens einen Innenraum (1.2) zur Passagierbeförderung aufweist, und
- einer Belüftungseinrichtung (2) zur Belüftung des Innenraums (1.2), die wenigstens einen an dem Wagenkasten (1.1) angeordneten Lufteinlass (2.1) für Frischluft und wenigstens eine Luftfiltereinrichtung (2.2) umfasst, wobei
- der Wagenkasten (1.1) wenigstens ein Fenster (3) aufweist, das eine Fensteroberkante (3.1) definiert, und
- der Lufteinlass (2.1) oberhalb der Fensteroberkante (3.1) angeordnet ist, **dadurch gekennzeichnet, dass**
- die Luftfiltereinrichtung (2.2) eine Adsorptionseinrichtung (2.4) zur zumindest teilweisen Adsorption flüchtiger organischer Stoffe umfasst.

2. Schienenfahrzeug nach Anspruch 1, **dadurch gekennzeichnet, dass** die Adsorptionseinrichtung (2.4) zur zumindest teilweisen Adsorption von Motorabgasen, insbesondere Dieselmotorabgasen, ausgebildet ist.

3. Schienenfahrzeug nach Anspruch 1 oder 2, **dadurch gekennzeichnet, dass** die Adsorptionseinrichtung (2.4) als Adsorptionsmittel Aktivkohle umfasst.

4. Schienenfahrzeug nach einem der vorhergehenden Ansprüche, **dadurch gekennzeichnet, dass** die Adsorptionseinrichtung (2.4) einen Trägerkörper (2.5) mit einer Trägeroberfläche umfasst, die von der zu filternden Luft überströmbar ist und mit einer Auflage aus einem Adsorptionsmittel, vorzugsweise einer Aktivkohle-Auflage, versehen ist.

5. Schienenfahrzeug nach Anspruch 4, **dadurch gekennzeichnet, dass** die Flächenbelegung der Trägeroberfläche mit dem Adsorptionsmittel, insbesondere einer Aktivkohle, mehr als 350 g/m², vorzugsweise mehr als 400 g/m², weiter vorzugsweise wenigstens 450 g/m², beträgt.

6. Schienenfahrzeug nach Anspruch 4, **dadurch gekennzeichnet, dass** die Flächenbelegung der Trägeroberfläche mit dem Adsorptionsmittel, insbesondere einer Aktivkohle, 350 g/m² bis 450 g/m² beträgt.

7. Schienenfahrzeug nach einem der vorhergehenden Ansprüche, **dadurch gekennzeichnet, dass** die Luftfiltereinrichtung (2.2) eine Partikelfiltereinrichtung (2.6) umfasst.

8. Schienenfahrzeug nach Anspruch 7, **dadurch gekennzeichnet, dass** die Partikelfiltereinrichtung (2.6) der Adsorptionseinrichtung (2.4) in Strömungsrichtung der zu filternden Luft vorgeschaltet ist.

9. Schienenfahrzeug nach Anspruch 7 oder 8, **dadurch gekennzeichnet, dass** die Partikelfiltereinrichtung (2.6) unmittelbar benachbart zu der Adsorptionseinrichtung (2.4) angeordnet ist.

10. Schienenfahrzeug nach einem der vorhergehenden Ansprüche, **dadurch gekennzeichnet, dass** die Adsorptionseinrichtung (2.4) im Wesentlichen plattenförmig ausgebildet ist.

11. Schienenfahrzeug nach Anspruch 10, **dadurch gekennzeichnet, dass**
- die Dickenabmessung der Adsorptionseinrichtung (2.4) 20 mm bis 35 mm, vorzugsweise etwa 30 mm, beträgt,
- die Längenabmessung der Adsorptionseinrichtung (2.4) 800 mm bis 950 mm, vorzugsweise etwa 875 mm, beträgt,
- die Breitenabmessung der Adsorptionseinrichtung (2.4) 175 mm bis 275 mm, vorzugsweise etwa 225 mm, beträgt.

12. Schienenfahrzeug nach einem der vorhergehenden Ansprüche, **dadurch gekennzeichnet, dass** die Luftfiltereinrichtung (2.2) im Bereich des Lufteinlasses (2.1) angeordnet ist.

13. Schienenfahrzeug nach einem der vorhergehenden Ansprüche, **dadurch gekennzeichnet, dass** der Lufteinlass (2.1) ein in der Außenwand des Wagenkastens (1.1) aufgenommenes, insbesondere lösbar befestigtes, Lüftungsgitter (2.1) umfasst.

14. Schienenfahrzeug nach einem der vorhergehenden Ansprüche, **dadurch gekennzeichnet, dass** es einen Verbrennungsmotor, insbesondere einen Dieselmotor, umfasst.

15. Zugverbund mit einem Schienenfahrzeug (1) nach einem der vorhergehenden Ansprüche.

16. Zugverbund nach Anspruch 15, **dadurch gekennzeichnet, dass** wenigstens ein mit dem Schienenfahrzeug (1) gekoppeltes weiteres Fahrzeug vorgesehen ist, das einen Verbrennungsmotor, insbesondere einen Dieselmotor, umfasst.

## Claims

1. Rail vehicle comprising
- a wagon body (1.1), which has at least one interior space (1.2) for the transport of passengers and
- a ventilation device (2) for ventilating the interior space (1.2), which comprises at least one air inlet (2.1) for fresh air arranged on the wagon body (1.1) and at least one air filtering device (2.2), wherein
- the wagon body (1.1) has at least one window (3), which defines an upper edge of the window (3.1) and
- the air inlet (2.1) is arranged above the upper edge of the window (3.1), **characterised in that**
- the air filtering device (2.2) comprises an adsorption device (2.4) for at least partial adsorption of volatile organic substances.

2. Rail vehicle according to Claim 1, **characterised in that** the adsorption device (2.4) is designed for the at least partial adsorption of engine exhaust gases, in particular diesel engine exhaust gases.

3. Rail vehicle according to Claim 1 or 2, **characterised in that** the adsorption device (2.4) has activated carbon as adsorption means.

4. Rail vehicle according to any one of the preceding claims, **characterised in that** the adsorption device (2.4) has a support body (2.5) with a support surface, which the air to be filtered can overflow and which is provided with a layer of an adsorption means, preferably an activated carbon layer.

5. Rail vehicle according to Claim 4, **characterised in that** the surface coverage of the support surface with the adsorption means, in particular an activated carbon, is more than 350 g/m², preferably more than 400 g/m², further preferably at least 450 g/m²,

6. Rail vehicle according to Claim 4, **characterised in that** the surface coverage of the support surface with the adsorption means, in particular an activated carbon, is 350 g/m² to 450 g/m².

7. Rail vehicle according to any one of the preceding claims, **characterised in that** the air filtering device (2.2) comprises a particle filtering device (2.6).

8. Rail vehicle according to Claim 7, **characterised in that** the particle filtering device (2.6) is arranged upstream of the adsorption device (2.4) in the flow direction of the air to be filtered.

9. Rail vehicle according to Claim 7 or 8, **characterised in that** the particle filtering device (2.6) is arranged directly adjacent to the adsorption device (2.4).

10. Rail vehicle according to any one of the preceding claim, **characterised in that** the adsorption device (2.4) is designed substantially plated-shaped.

11. Rail vehicle according to Claim 10, **characterised in that**
- the thickness dimension of the adsorption device (2.4) is 20 mm to 35 mm, preferably about 30 mm,
- the length dimension of the adsorption device (2.4) is 800 mm to 950 mm, preferably about 875 mm,
- the width dimension of the adsorption device (2.4) is 175 mm to 275 mm, preferably about 225 mm.

12. Rail vehicle according to any one of the preceding claims, **characterised in that** the air filtering device (2.2) is arranged in the region of the air inlet (2.1).

13. Rail vehicle according to any one of the preceding claims, **characterised in that** the air inlet (2.1) has a ventilation grille (2.1) accommodated, in particular in a detachably secured manner, in the outer wall of the wagon body (1.1).

14. Rail vehicle according to any one of the preceding claims, **characterised in that** it has an internal combustion engine, in particular a diesel engine.

15. Train set having a rail vehicle (1) according to any one of the preceding claims.

16. Train set according to Claim 15, **characterised in that** at least one further vehicle is provided, which is coupled to the rail vehicle (1) and comprises an internal combustion engine, in particular a diesel engine.

## Revendications

1. Véhicule ferroviaire, comprenant
- un wagon (1.1) avec au moins un espace intérieur (1.2) pour transporter des passagers, et
- un dispositif d'aération (2) pour aérer l'espace intérieur (1.2), comprenant au moins une entrée d'air (2.1) frais disposée sur le wagon (1.1) et au moins un dispositif de filtration d'air (2.2), dans lequel
- le wagon (1.1) est munie d'au moins une fenêtre (3) définissant un bord supérieur de la fenêtre (3.1), et
- l'entrée d'air (2.1) est disposée au-dessus du bord supérieur de la fenêtre (3.1), **caractérisé en ce que**
- le dispositif de filtration d'air (2.2) comprend un dispositif d'adsorption (2.4) pour adsorber au moins partiellement des substances organiques volatiles.

2. Véhicule ferroviaire selon la revendication 1, **caractérisé en ce que** le dispositif d'adsorption (2.4) est conçu pour adsorber au moins partiellement des gaz d'échappement de moteur, en particulier des gaz d'échappement de moteur diesel.

3. Véhicule ferroviaire selon la revendication 1 ou 2, **caractérisé en ce que** le dispositif d'adsorption (2.4) utilise du charbon actif comme moyen d'adsorption.

4. Véhicule ferroviaire selon l'une quelconque des revendications précédentes, **caractérisé en ce que** le dispositif d'adsorption (2.4) est muni d'un corps de support (2.5) avec une surface de support, laquelle peut être passée par l'air à filtrer et qui est munie d'une couche d'un moyen d'adsorption, de préférence une couche de charbon actif.

5. Véhicule ferroviaire selon la revendication 4, **caractérisé en ce que** l'occupation de la surface de support avec moyen d'adsorption, en particulier du charbon actif, est supérieure à 350 g/m², de préférence supérieure à 400 g/m², encore plus préférablement d'au moins 450 g/m².

6. Véhicule ferroviaire selon la revendication 4, **caractérisé en ce que** l'occupation de la surface de support avec moyen d'adsorption, en particulier du charbon actif, est de 350 g/m² à 450 g/m².

7. Véhicule ferroviaire selon l'une quelconque des revendications précédentes, **caractérisé en ce que** le dispositif de filtration d'air (2.2) comprend un dispositif de filtration de particules (2.6).

8. Véhicule ferroviaire selon la revendication 7, **caractérisé en ce que** le dispositif de filtration de particules (2.6) est disposé en amont du dispositif d'adsorption (2.4) dans le sens d'écoulement de l'air à filtrer.

9. Véhicule ferroviaire selon la revendication 7 ou 8, **caractérisé en ce que** le dispositif de filtration de particules (2.6) est disposé directement adjacent au dispositif d'adsorption (2.4).

10. Véhicule ferroviaire selon l'une quelconque des revendications précédentes, **caractérisé en ce que** le dispositif d'adsorption (2.4) est configuré en ayant sensiblement la forme d'un panneau.

11. Véhicule ferroviaire selon la revendication 10, **caractérisé en ce que**
- l'épaisseur du dispositif d'adsorption (2.4) est de 20 mm à 35 mm, et est de préférence de 30 mm,
- la dimension longitudinale du dispositif d'adsorption (2.4) est de 800 mm à 950 mm, et est de préférence de 875 mm,
- la largeur du dispositif d'adsorption (2.4) est de 175 mm à 275 mm, et est de préférence de 225 mm.

12. Véhicule ferroviaire selon l'une quelconque des revendications précédentes, **caractérisé en ce que** le dispositif de filtration d'air (2.2) est disposé dans la région de l'entrée d'air (2.1).

13. Véhicule ferroviaire selon l'une quelconque des revendications précédentes, **caractérisé en ce que** l'entrée d'air (2.1) est munie d'une grille d'aération (2.1) logée, en particulier de manière fixée de manière amovible, dans la paroi extérieure du wagon (1.1).

14. Véhicule ferroviaire selon l'une quelconque des revendications précédentes, **caractérisé en ce qu'**il dispose d'un moteur à combustion interne, en particulier un moteur diesel.

15. Rame ayant un véhicule ferroviaire (1) selon l'une quelconque des revendications précédentes.

16. Rame selon la revendication 15, **caractérisée en ce qu'**au moins un autre véhicule est fourni, lequel est couplé au véhicule ferroviaire (1) et comprend un moteur à combustion interne, en particulier un moteur diesel.
